# EUROPEAN PATENT SPECIFICATION

(11) **EP 1 262 461 B1**
(45) Date of publication and mention of the grant of the patent: **09.11.2005**
(21) Application number: 02011178.7
(22) Date of filing: 21.05.2002
(51) Int. Cl.: C02F 9/00, C02F 1/28

(54) **Two-stage water filtration system**
Zweistufiges Wasserfiltrationssystem
Système de filtration d'eau en deux étappes

(30) Priority: 23.05.2001 BR 8101185
(43) Date of publication of application: 04.12.2002
(73) Proprietor: Hoken Industria, Comercio, Importaçao e Exportaçao Ltda., 15075-610 Sao José do rio Preto (SP) (BR)
(72) Inventor: Yostsui, Helio Tatsuo, Verde Sao José do Rio Preto CEP15075-610 (BR)
(74) Representative: Fernandez Lerroux, Aurelio

(56) References cited:
- EP-A- 0 376 126
- FR-A- 2 780 718
- US-A- 3 823 824
- US-A- 4 897 187
- US-A- 5 269 919
- US-A- 5 552 046

## Description

The present descriptive memorial refers itself to a new "FILTER ASSEMBLY FOR FILTERING WATER THROUGH DOUBLE PROCESSING UNITS", in other words, is a filter developed to provide water supply through the ordinary public plumbing service - treated water; mentioned outstanding filter provides several advantages over ordinary filtered water as it works under two separate functions done by two separate chambers, conveniently connected in series specially for this purpose.

The conventionally utilized filters in the residential use water purification are pretty well-known, which ones use different means and filtering elements, being very common the use of a lid and a base, between the ones the filtering element lodges itself, for example based upon activated or similar coal. To do that, these conventional filters are endowed of a ordinary public plumbing service water entry and a treated water exit.

Some of the known filters are composed by a two or more filter stages (US5552046, US3823824, US5269919), but included within one filter unit, and other devices comprise two units (EP376126, US4897187 and FR2780718). Nevertheless, in the actual technique condition, the existent filters composed by two chambers do not provide the same filter processing described by this invention.

Thinking in increasing the filters efficiency for domestic use water treatment, the inventor, after several researches, created the mentioned filter, and according to it, the water through the ordinary public plumbing service water is processed in two stages, each of them in a different chamber; in the first chamber the physical processing is consummated, through a filtering element made out of polyethylene (PE) with the purpose of eliminating bacterium, iron residues (rust), nitrate and pesticide; in a second chamber, an activated coal filter in block is lodged (carbon block) that makes the chlorine adsorption, some metals like lead, colors, smell and flavor.

This way, the treated water contains high quality and a purity level considered ideal to human consumption, so in other words, light, without color, smell and any kind of flavor.

In practical terms, the equipment can be installed above the sink or continue attached to the wall, being connected to the faucet by a diffuser that deviates the water to the chambers, in their turn interconnected by a nipple or similar. The water route up to the equipment, occurs through a non-toxic PVC hose, specially developed to water, which is connected between the diffuser and the equipment. The hose is coupled to an entry elbow shaped, in its turn threaded in a lid, which has the function of supporting the filtering element and to receive the filter closing glass.

A nipple joins the two chambers, while a metal support does the set main maintaining and allows the filter optional fixation to the wall.

To the water discharge, in the filter exit, after the second chamber, a faucet is adjusted to get the water ready for consumption.

The filter will be, after, explained in its constructive and functional details, with reference to the attached designs, on which ones are represented:

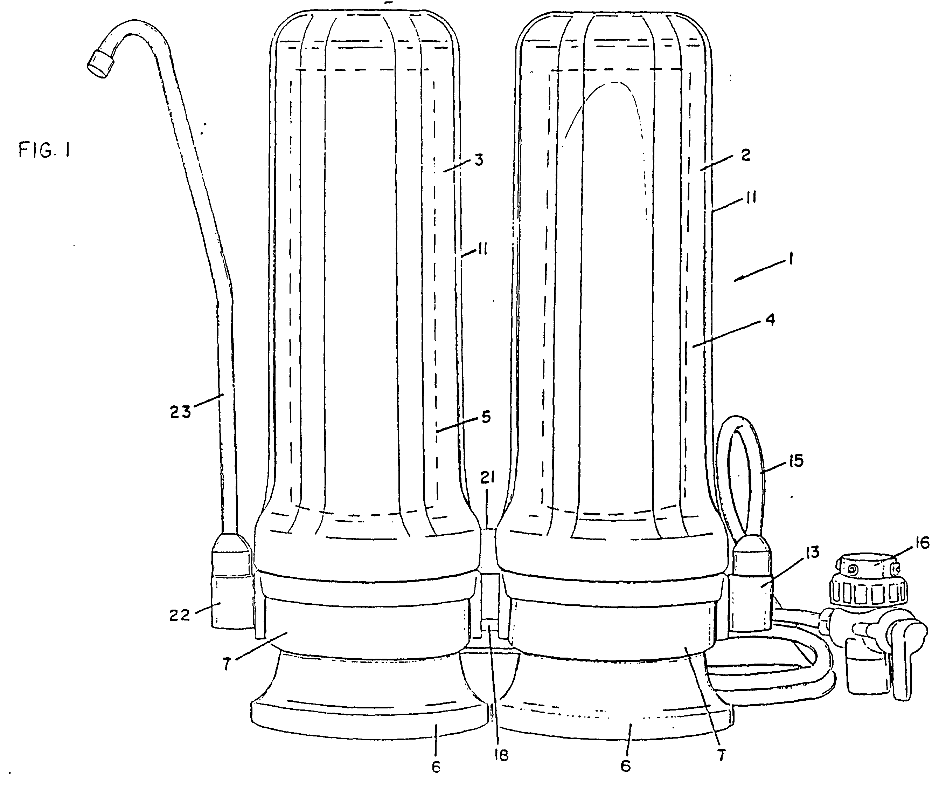

Fig. 1: Sight in perspective of the assembled filter
Fig. 2: Sight in exploded perspective of the filter in one of the chambers.
Fig. 3: Sight in perspective of the assembled anterior figure filter in longitudinal incision.

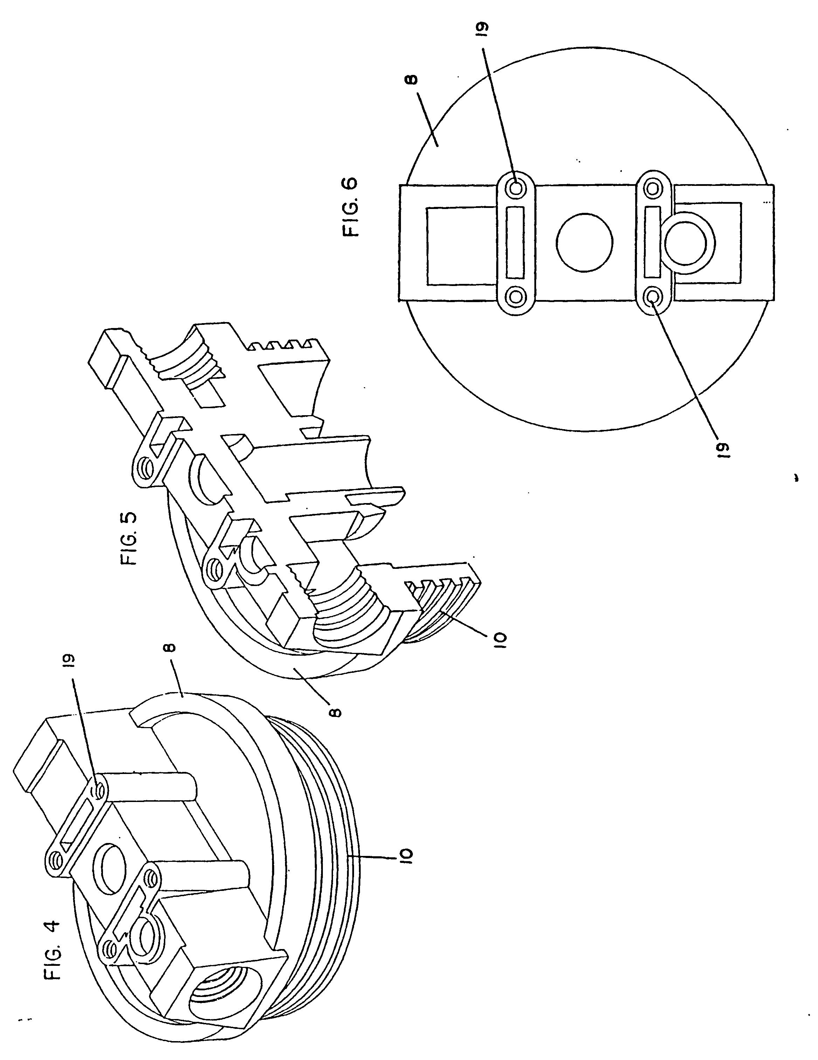

Fig. 4: Sight in perspective of the filter base, in contrary position to the use.
Fig. 5: Sight in perspective of the anterior figure filter base, in incision.
Fig, 6: Lower detail of part of the filter base, showing the orifices in order to apply affixation screws.

The "FILTER ASSEMBLY FOR FILTERING WATER THROUGH DOUBLE PROCESSING UNITS", reason of this Patent, consists in a filter (1) which consists of two chambers (2) and (3) connected in series, the first one gets a filtering element (4) made out of polyethylene (PE), while the second one gets one filtering element (5) made out of activated coal in block (carbon block).

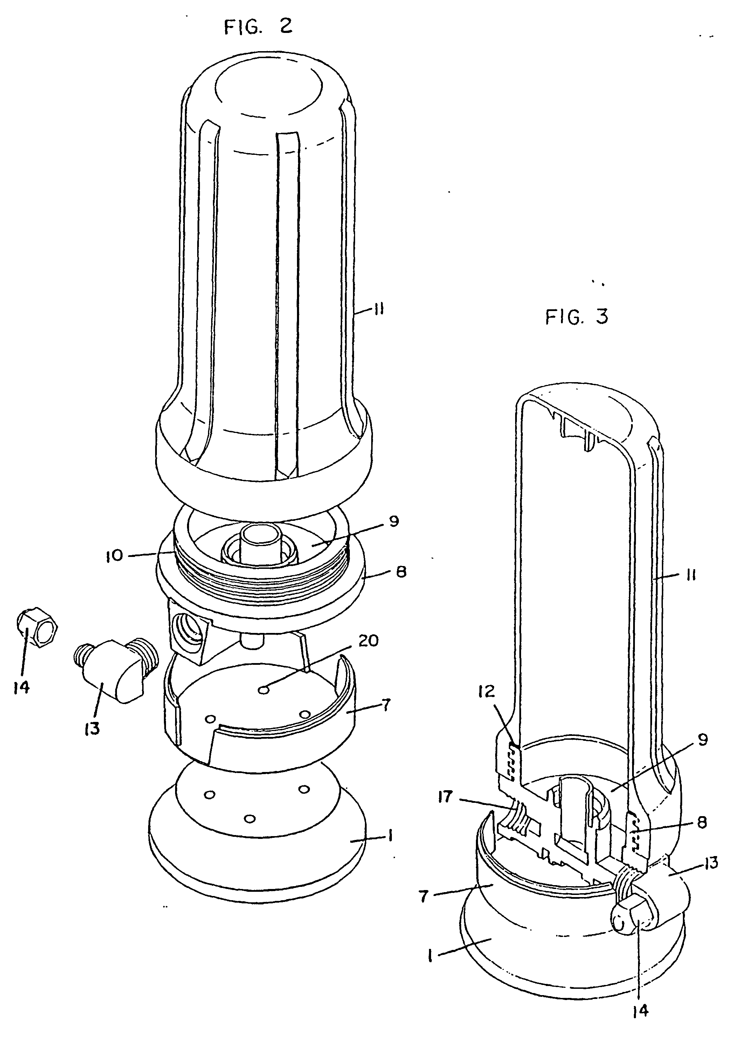

According to the figures 2 and 3, each filter set is provided with a lower base (6) holding an intermediate base (7), which in turn holds the lid (8) thus shaping a base (9) of support for the filtering element (4/5) besides providing a peripheric thread (10) which allows the glass fixation (11) which encloses the set, that contains a sealing element (12) like an o'ring.

The base (9) holds a radial opening that gets a tube with a 90° angle with the shape of an elbow (13) with a pointed device (14) destined to receive the non-toxic PVC hose (15), in its turn coupled to the diffuser (16) that connects the set to the faucet, deviating the water to the mentioned chambers (2/3). Another radial opening (17), opposite to the former is supposed to get the nipple (18) uniting the two chambers (2/3).

In the face of the lid (8) opposite to that one that configures the base (9) of the filtering element support, orifices are distributed (19) coinciding with orifices (20) of the intermediate base (7) in order to apply affixation screws with pride thread. Lower bases (6) and intermediates bases (7) are fixed to the bases (9) by means of these screws and bases (9) include means, peripheric thread (10), to fix the glasses (11).

The back of the filter (1) gets a metal support (21), placed between the base (6) and the intermediate base (7), that promotes the set main sustentation, as well as it offers the option of the set fixation to the wall.

So, the first chamber (2) gets a polyethylene filtering element (4), while the chamber (3) gets the filtering element made out of activated coal, so that, on this second chamber (3) is planning an outlet elbow shaped (22) that gets a faucet (23) that gets the ready for consumption water.

In constructive terms, the filter has thermoplastic materials (PP - polypropylene), except for fence, support, tap and screws.

The filter (1) must be connected to the water ordinary public plumbing supply, through the diffuser (16), deviating to the hose (15), in order to get the interior of the first chamber (2) that promotes the water physical processing, going, after the passage through the filtering element (4), to the second chamber (3) passing through the filtering element (5) that realizes the chlorine adsorption, metals, colors, smell and flavor treatment; being discharged through the faucet for the consumption.

## Claims

1. Two-stage water filtration system, which consists of two chambers (2) and (3) interconnected in series, containing each chamber a filtering element, first chamber a particulate filter and second chamber a activated carbon in block filter, **characterized in that** the filter assembly provides water filtering through two processing units (2) and (3), interconnected in series, where each filtering stage is done within a different unit, and where first filtering stage is a particulate filtering done by the first filtering chamber (2) which holds one filtering element (4) made out of polyethylene (PE), while the second filtering stage is done by the second chamber (3) which holds a filtering element (5) based upon activated coal in block; each set or unit is provided with a lower base (6) holding an intermediate base (7) which in turn holds the lid (8) thus shaping a surface for the filtering element (4/5) besides providing a peripheric thread (10) which allows a glass fixation (11) to enclose the set, that contains a sealing element (12) like an "o'ring"; the base (9) of first chamber (2) holds a radial opening that gets a 90° tube with the shape of an elbow (13) with a pointed device (14) destined to a receive non-toxic PVC hose (15), which connects a diffuser (16) to the filter (1), and said diffuser (16) connects the set to a faucet, deviating the water to the mentioned chambers (2/3); on the second chamber (3), is provided an outlet elbow shaped (22) that gets a faucet (23) that gets the water ready for consumption; another radial opening (17), opposite to the former is supposed to get a nipple (18) uniting in series the two chambers (2/3); in the face of the lid opposite to that one that configures the base (9) of the filtering element support, orifices are distributed (19) coinciding with orifices (20) of the intermediate base (7) in order to apply affixation screws which fix the lower bases (6) and intermediate bases (7) to the bases (9); the back of the filter (1) gets a metal support (21) placed between the base (6) and the intermediate base (7).

## Patentansprüche

1. Zweistufiges Wasserfilterungssystem, das aus zwei in Reihe verbundenen Kammern (2) und (3) bestcht, wobei jede dieser Kammern eines Filterelement umfasst, wobei die erste Kammer eines Partikelfilter hat und die zweite Kammer eines Filter aus blockförmiger Aktivkohle hat, **dadurch gekennzeichnet, dass** die Filteranordnung die Filterung des Wassers durch zwei in Reihe verbundene Verarbeitungseinheiten (2) und (3) beschafft, wobei jede Filterungsstufe in einer anderen Einheit erfolgt, und wobei die erste Filterungsstufe eine durch die erste Filterungskammer (2), die ein aus Polyethylen (PE) bestehendes Filterungselement (4) aufweist, durchgeführte Partikelfilterung ist, während die zweite Filterungsstufe durch die zweite Kammer (3), die ein Filterungselement (5) aus einer Basis von blockförmiger Aktivkohle aufweist, durchgeführt ist; wobei jeweils die Aggregaten bzw. Einheiten mit einer Unterbasis (6) versehen sind, die eine seinerseits die Klappe (8) stützende Zwischenbasis (7) trägt, indem eine Oberfläche für das Filterungselement (4/5) ausgeformt wird, welche Oberfläche zusätzlich eine umlaufende Windung (10) versieht, um eine Glasbefestigung (11) zum Anschluss des ein O-ringförmiges Abdichtungselement (12) aufweisenden Aggregates zu ermöglichen; wobei die Basis (9) der ersten Kammer (2) eine radiale Öffnung aufweist, die ein kröpfungsförmiges 90°-Rohr (13) mit einem scharfen Element (14) umgibt, das bestimmt ist, eine nicht-toxische PVC-Hülse (15) aufzunehmen, die an das Filter (1) einen Diffusor (16) anschließt, der das Aggregat mit einem das Wasser zu den vorgesagten Kammern (2/3) ableitenden Hahn verbindet; wobei in der zweite Kammer (3) einen kröpfungsförmigen Auslass (22) vorgesehen ist, der einen das genussfertige Trinkwasser empfangenden Hahn (23) aufweist; wobei eine andere die vorhergehende Öffnung gegenüberstehende radiale Öffnung (17) vermutlich einen die beide Kammer (2/3) serienmäßig verbindenden Nippel (18) aufnimmt; wobei in der Seite der Klappe, die zu der die Basis (9) der Filterungselementstütze bildende Seite abgewandt ist, Bohrungen (19) verteilt sind, die mit Bohrungen (20) der Zwischenbasis (7) entsprechen, um Befestigungsschrauben aufzubringen, die die Unterbasis (6) und die Zwischenbasis (7) mit den Basis (9) befestigen; wobei die Filterrückseite (1) eine zwischen der Basis (6) und der Zwizchenbasis (7) angeordnete Metallstütze (21) aufnimmt.

## Revendications

1. Système de filtration en deux étapes consistant en deux chambres (2) et (3) connectées en série, dans lequel chacune des chambres contient un élément de filtration, la première chambre un filtre de particules et la deuxième chambre un filtre à charbon actif en bloc, **caractérisé en ce que** l'assemblage de filtres fourmit la filtration de l'eau à travers deux unités (2) et (3) de traitement connectées en série, de façon que chaque étape de filtration est réalisée à l'intérieur d'une unité différente et de façon que la première étape de filtration est une filtration de particules réalisée par la première chambre de filtration (2) portant un élément de filtration (4) fait de polyéthylène (PE), tandis que la deuxième étape de filtration est réalisée par la deuxième chambre (3) portant un élément de filtration (5) à base de charbon actif en bloc ; chaque ensemble ou unité est fournie d'une base inférieure (6) soutenant une base intermédiaire (7) qui, à son tour, soutient le couvercle (8), conformant ainsi une surface pour l'élément de filtration (4/5), fournisant en outre un filetage périphérique (10) permettant une fixation (11) du verre pour attacher l'ensemble contenant un élément de fermeture (12) comme un joint torique ; la base (9) de la première chambre (2) porte une ouverture radiale recevant un tube de 90° en forme de coude (13) avec un élément pointu (14) destiné a recevoir un tuyau flexible (15) de PVC non toxique connectant un diffuseur (16) au filtre (1) et ledit diffuseur (16) connecte l'ensemble à un robinet déviant l'eau aux chambres (2/3) précédemment mentionnées ; dans la deuxième chambre (3), est fournie une sortie en forme de coude (22) ayant un robinet (23) qui reçoit l'eau pour la consommation ; une autre ouverture radiale (17), en face de la précédente, est supposée recevoir un mamelon (18) unissant en série les deux chambres (2/3) ; sur le côté du couvercle, face au côté configurant la base (9) du support de l'élément de filtration, sont distribués des orifices (19) qui coïncident avec des orifices (20) de la base intermédiaire (7) afin d'appliquer des vis de fixation qui fixent les bases infécieures (6) et les bases intermédiaires (7) aux bases (9) ; la partie postérieure du filtre (1) reçoit un support de métal (21) placé entre la base (6) et la base intermédiaire (7).
